(19) Europäisches Patentamt
European Patent Office
Office européen des brevets

(11) **EP 4 475 102 B1**

(12) **FASCICULE DE BREVET EUROPEEN**

(45) Date de publication et mention
de la délivrance du brevet:
**17.09.2025   Bulletin 2025/38**

(21) Numéro de dépôt: **24178644.1**

(22) Date de dépôt: **28.05.2024**

(51) Classification Internationale des Brevets (IPC):
*G08B 13/12* *(2006.01)*     *G01D 4/00* *(2006.01)*

(52) Classification Coopérative des Brevets (CPC):
**G08B 13/126; G01S 7/4813; G01S 17/04;
G01S 17/88;** G01D 4/00

(54) **DETECTION OPTIQUE DE L'OUVERTURE D'UN BOITIER**

OPTISCHE DETEKTION DER ÖFFNUNG EINES GEHÄUSES

OPTICAL DETECTION OF THE OPENING OF A HOUSING

(84) Etats contractants désignés:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priorité:  **07.06.2023   FR 2305742**

(43) Date de publication de la demande:
**11.12.2024   Bulletin 2024/50**

(73) Titulaire: **SAGEMCOM ENERGY & TELECOM SAS
92270 Bois-Colombes (FR)**

(72) Inventeurs:
• **GOARANT, Mickaël
92270 Bois-Colombes (FR)**
• **WEBER, Patrick
92270 Bois-Colombes (FR)**

(74) Mandataire: **Cabinet Boettcher
5, rue de Vienne
75008 Paris (FR)**

(56) Documents cités:
**EP-B1- 2 905 585     WO-A1-2013/118257**

**Description**

L'invention concerne le domaine de la détection de l'ouverture d'un boîtier d'un équipement (qui peut être un compteur, mais pas nécessairement).

ARRIERE PLAN DE L'INVENTION

Certaines personnes malintentionnées connaissent des techniques qui leur permettent, après avoir ouvert le boîtier de leur compteur, de manipuler celui-ci pour réduire la mesure de leur consommation. Il peut s'agir de tout type de compteur : compteur d'électricité, d'eau, de gaz, etc.

On connaît un certain nombre de dispositifs de détection de l'ouverture du boîtier d'un compteur.

Dans le cas des compteurs d'eau et de gaz, le dispositif de détection doit consommer très peu d'énergie électrique, car ces compteurs sont généralement alimentés par une pile ou une batterie.

Un dispositif de détection classiquement utilisé comprend un contact électromécanique dont l'état change lorsque l'on ouvre le boîtier. Cependant, les compteurs d'eau et de gaz sont fréquemment remplis de gel à la fin de leur fabrication. Lorsqu'il polymérise, ce gel a tendance à bloquer le contact électromécanique et rend ainsi inopérant le dispositif de détection.

Les documents WO2013118257A1 et EP2905585B1 divulguent 1e préambule respectif des revendications 1 et 14.

OBJET DE L'INVENTION

L'invention a pour objet de détecter efficacement l'ouverture du boîtier d'un équipement, sans utiliser de contact électromécanique et en consommant très peu d'énergie électrique.

RESUME DE L'INVENTION

En vue de la réalisation de ce but, on propose un équipement selon la revendication 1.

La détection, réalisée via l'émission, la réflexion interne et la capture du signal lumineux de détection, est à la fois efficace, simple et peu coûteuse à mettre en œuvre. L'invention fonctionne même lorsque le boîtier est rempli de gel. Les composants utilisés consomment très peu d'énergie électrique.

On propose de plus un procédé de détection selon 1a revendication 14.

BREVE DESCRIPTION DES DESSINS

Il sera fait référence aux dessins annexés parmi lesquels :

[Fig. 1] la figure 1 représente une vue en coupe simplifiée, selon un plan vertical, d'un compteur de fluide ;
[Fig. 2] la figure 2 représente des étapes du procédé de détection.

DESCRIPTION DETAILLEE DE L'INVENTION

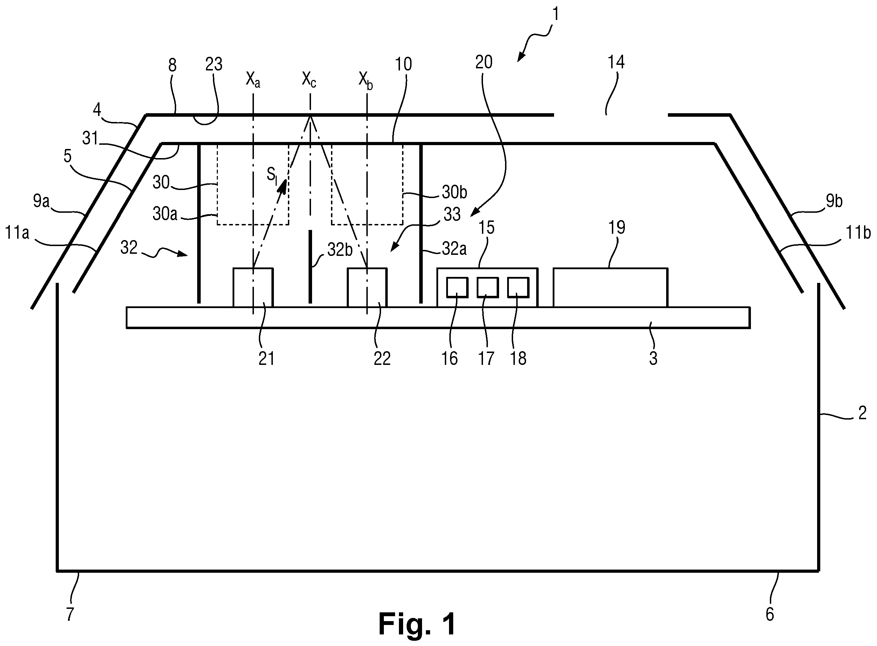

En référence à la figure 1, un compteur de fluide 1 (par exemple d'eau ou de gaz) est destiné à mesurer la consommation en fluide de l'installation d'un utilisateur (abonné). Le fluide est fourni à l'installation par un réseau de distribution.

Le compteur 1 comporte un boîtier 2 et une carte électrique 3.

Le boîtier 2 comprend ici une première partie de boîtier 4, une deuxième partie de boîtier 5 et un châssis 6.

Le châssis 6 comprend une face inférieure 7 qui est aussi la face inférieure du boîtier 2.

La première partie de boîtier 4 comprend une face supérieure 8 qui est aussi la face supérieure du boîtier 2, une première face latérale 9a et une deuxième face latérale 9b. La première partie de boîtier 4 est amovible. Elle peut être retirée par un opérateur qui travaille par exemple pour le distributeur du fluide ou pour le gestionnaire du réseau de distribution. La première partie de boîtier 4 est opaque à la lumière visible (tout comme le châssis 6).

La deuxième partie de boîtier 5 est transparente ou translucide à la lumière visible. Elle est montée à l'intérieur du boîtier 2, c'est-à-dire entre la première partie de boîtier 4 et l'intérieur du compteur 1. Elle comprend une face supérieure 10, une première face latérale 11a et une deuxième face latérale 11b, qui sont positionnées parallèlement, en regard et à proximité respectivement de la face supérieure 8, de la première face latérale 9a et de la deuxième face latérale 9b de la première partie de boîtier 4.

La face supérieure 8 de la première partie de boîtier 4 comporte une ouverture 14. La lumière de l'extérieur peut donc pénétrer à l'intérieur du compteur 1 via cette ouverture 14 et la deuxième partie de boîtier 5.

La carte électrique 3 du compteur 1 est positionnée parallèlement et à proximité de la face supérieure 10 de la deuxième partie de boîtier 5 (et donc de la face supérieure 8 de la première partie de boîtier 4).

La carte électrique 3 comporte tout d'abord une unité de traitement 15.

L'unité de traitement 15 comprend au moins un composant de traitement 16, qui est par exemple un processeur « généraliste », un processeur spécialisé dans le traitement du signal (ou DSP, pour *Digital Signal Processor*), un microcontrôleur, ou bien un circuit logique programmable tel qu'un FPGA (pour *Field Programmable Gate Arrays*) ou un ASIC (pour *Application Specific Integrated Circuit*). Le composant de traitement 16 est ici un microcontrôleur.

L'unité de traitement 15 comprend de plus une ou des mémoires 17, reliées à ou intégrées dans le microcontrôleur 16. Au moins l'une de ces mémoires 17 forme un support d'enregistrement lisible par ordinateur, sur lequel est enregistré au moins un programme d'ordinateur comprenant des instructions qui conduisent le microcontrôleur 16 à exécuter au moins certaines des étapes du procédé de détection qui sera décrit plus bas.

L'unité de traitement 15 comporte de plus un convertisseur analogique numérique (CAN) 18, possiblement (mais pas nécessairement) intégré dans le microcontrôleur 17.

La carte électrique 3 comporte aussi un écran LCD 19, qui est positionné en face de l'ouverture 14, ce qui permet à l'utilisateur de voir l'écran 19 au travers de l'ouverture 14 et de la deuxième partie de boîtier 5.

Le compteur 1 comprend de plus un dispositif de détection 20 de l'ouverture du boîtier 1.

Le dispositif de détection 20 comprend ici l'unité de traitement 15, et notamment le microcontrôleur 16 et le CAN 18. Ceci n'empêche pas que l'unité de traitement 16 peut avoir des fonctions autres que celle-ci, et par exemple des fonctions de métrologie (mesure de la consommation de fluide).

Le dispositif de détection 20 comporte de plus un émetteur 21 et un récepteur 22, montés sur la carte électrique 3.

L'émetteur 21 est agencé pour émettre des signaux lumineux, et le récepteur 22 est agencé pour recevoir les signaux lumineux après que ceux-ci se soient réfléchis contre une paroi interne 23 du boîtier 1. Par « interne », on entend du côté de l'intérieur du compteur 1.

Cette paroi interne 23 est la paroi interne de la face supérieure 8 de la première partie de boîtier 4. Les signaux lumineux émis par l'émetteur 21 traversent donc la deuxième partie de boîtier 5, sont réfléchis par la paroi interne 23, puis capturés par le récepteur 22.

L'émetteur 21 est ici une diode électroluminescente (LED) et le récepteur 22 est ici un phototransistor.

La LED 21 et le phototransistor 22 sont ici tous deux positionnés en regard et à proximité de la face supérieure 10 de la deuxième partie de boîtier 5 du boîtier 2, qui est donc elle-même positionnée entre la première partie de boîtier 4 d'une part, et la LED 21 et le phototransistor 22 d'autre part.

La portion de la face supérieure 10 de la deuxième partie de boîtier 5, en regard de laquelle sont positionnés la LED 21 et le phototransistor 22, est elle-même positionnée en regard d'une portion de la première partie de boîtier 4 qui est une portion « pleine » (et non en regard de l'ouverture 14).

Ici, la LED 21 et le phototransistor 22 sont positionnés à 5 mm l'un de l'autre, et à une distance de 1 cm de la paroi interne 23 de la première partie de boîtier 4.

On explique tout d'abord le principe de l'invention. Celle-ci vise à détecter si le boîtier 2 est ouvert ou fermé et donc ici, plus précisément, à détecter si la première partie de boîtier 4 a été ouverte (c'est-à-dire que l'une de ses extrémités au moins a été éloignée du reste du boîtier 2).

La détection se base sur la mesure des réflexions optiques d'un signal lumineux émis par la LED 21 puis réfléchi sur la paroi interne 23 du boîtier 2, et enfin capturé par le phototransistor 22.

L'absence ou l'écartement de la première partie de boitier 4 conduit à une limitation des réflexions optiques, ce qui fait chuter le niveau de signal dans le phototransistor 22. Cette chute peut être détectée.

L'unité de traitement 15 est donc agencée pour :

- piloter la LED 21 (c'est-à-dire l'allumer) pour que celle-ci émette un signal lumineux de détection $S_1$ ;
- alors que la LED 21 est allumée, acquérir un premier signal électrique produit par le phototransistor 22 lorsque celui-ci reçoit le signal lumineux de détection $S_1$ ;
- détecter, en fonction d'un premier niveau du premier signal électrique, si le boîtier 2 est ouvert ou fermé ;
- éteindre la LED 21 (cette étape peut être réalisée avant la précédente).

On note que l'émission du signal lumineux de détection $S_1$ consiste ici simplement à allumer la LED 21. La réception du signal lumineux de détection $S_1$ est la capture par le phototransistor 22 du flux lumineux émis par la LED 21 et réfléchi par la paroi interne 23 (et par d'autres parois du boîtier 2 éventuellement).

Le premier signal électrique est ici une première tension $V_1$ produite par le phototransistor 22. Le premier niveau est l'amplitude de la première tension $V_1$.

La première tension $V_1$ est une tension analogique.

La première tension $V_1$ est numérisée par le CAN 18 pour produire un signal numérique.

Cette configuration n'est pas obligatoire ; le récepteur pourrait notamment être un capteur « numérique ».

Le microcontrôleur 16 détecte en fonction de la première tension $V_1$ si le boîtier 2 est ouvert ou fermé.

Afin d'améliorer les performances de la détection, l'énergie lumineuse est mesurée alors que la LED 21 est allumée (comme on vient de le voir), puis l'énergie lumineuse est mesurée sans que la LED 21 ne soit allumée.

L'ordre utilisé pour faire les deux mesures est indifférent.

L'unité de traitement 15 acquiert donc un deuxième signal électrique produit par le phototransistor 22 alors que la LED 21 est éteinte (c'est-à-dire qu'elle n'émet pas de lumière), et réalise la détection de l'ouverture ou de la fermeture du boîtier 2 en fonction non pas uniquement du premier niveau du premier signal électrique (amplitude de la première tension $V_1$), mais en fonction d'une valeur représentative d'une différence entre le premier niveau et un deuxième niveau du deuxième signal électrique.

Le deuxième signal électrique est une deu-

xième tension $V_2$ produite par le phototransistor 22. Le deuxième niveau est l'amplitude de la deuxième tension $V_2$.

La deuxième tension $V_2$ est une tension analogique, numérisée par le CAN 18.

C'est donc l'analyse de la différence d'éclairage au niveau du récepteur 22, et des signaux électriques (première tension $V_1$ et deuxième tension $V_2$) qu'il génère, qui permet d'éliminer les perturbations que produiraient :

- un rayon lumineux extérieur au compteur 1 et venant « simuler » la LED 21 ;
- un rayon lumineux extérieur au compteur 1 et venant saturer le phototransistor 22.

Dans le cas nominal, avec le boîtier 2 fermé, l'écart de luminosité, mesuré par le phototransistor 22 avec la LED 21 allumée et sans la LED 21 allumée, est élevé. En effet, une très grande partie du flux lumineux émis par la LED 21 est capturé par le phototransistor 22.

Par contre, si le boîtier 2 est ouvert, le flux lumineux n'est pas réfléchi par la paroi interne 23 de la première partie de boîtier 4, qui a été retirée. Ainsi, la différence entre les deux mesures est nettement plus faible. Bien sûr, si le boîtier 2 n'est pas ouvert complètement et si la première partie de boîtier 4 est toujours présente en étant ouverte partiellement, le flux lumineux est encore partiellement réfléchi par la paroi interne 23 mais d'une manière moins importante, ce qui permet aussi de détecter cette ouverture partielle.

L'invention fonctionne très efficacement quelle que soit la lumière ambiante à l'extérieur du compteur 1 :

- soit la lumière ambiante est présente, et la différence entre les deux mesures se réduit du fait de l'éclairage du phototransistor 22 par la lumière ambiante ;
- soit il n'y a pas de lumière ambiante, et c'est l'absence ou la réduction des réflexions sur la première partie de boîtier 4, désormais retirée, qui réduit cette différence entre les deux mesures.

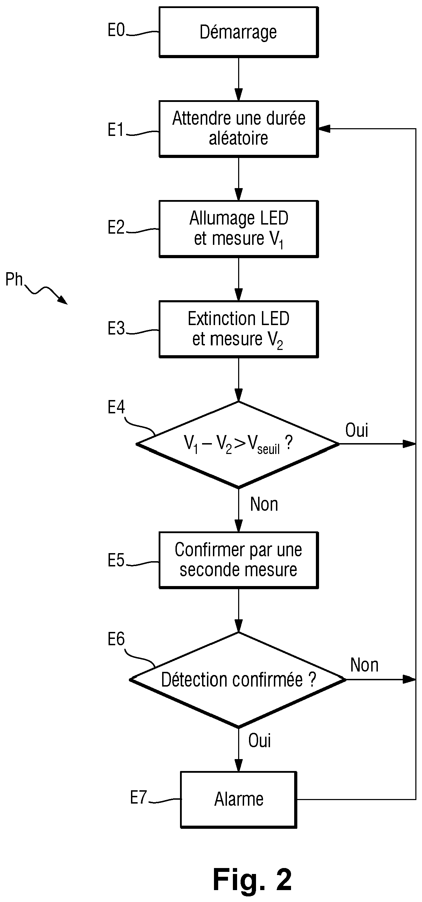

On décrit plus précisément, en référence à la figure 2, le procédé de détection, qui est mis en œuvre par l'unité de traitement 15.

Le procédé débute par une étape de démarrage : étape E0.

Le procédé comporte des phases de détection Ph, qui sont répétées en permanence depuis la mise sous tension initiale du compteur 1.

Lorsqu'une phase de détection est terminée, l'unité de traitement 15 définit une durée aléatoire, et attend pendant un temps égal à la durée aléatoire : étape E1.

Cette durée aléatoire est « tirée au sort » après chaque phase de détection.

Ceci permet d'assurer qu'il est impossible, pour un potentiel fraudeur, de prédire le début des phases de détection Ph. On empêche ainsi la réalisation d'une tentative de fraude consistant à émettre un signal lumineux semblable à celui émis par la LED 21.

Ici, la durée aléatoire est bornée entre une durée minimale, égale par exemple à 5 secondes, et une durée maximale, égale par exemple à 5 minutes.

Les valeurs de la durée aléatoire sont ici réparties uniformément, mais une autre répartition, par exemple gaussienne ou log-normale, est possible.

Suite à l'étape E1, la phase de détection Ph démarre.

L'unité de traitement 15 allume la LED 21 qui émet un signal lumineux de détection $S_l$. L'unité de traitement 15 acquiert la première tension $V_1$ produite par le phototransistor 22 lorsque celui-ci reçoit le premier signal lumineux de détection $S_l$ : étape E2.

Puis, l'unité de traitement 15 éteint la LED 21, et acquiert la deuxième tension $V_2$ produite par le phototransistor 22 : étape E3.

Comme on l'a vu, l'ordre des deux étapes E2 et E3 peut être inversé.

L'unité de traitement 15 réalise la détection de l'ouverture ou de la fermeture du boîtier 2 en fonction d'une valeur représentative d'une différence entre le premier niveau du premier signal électrique ($V_1$) et le deuxième niveau du deuxième signal électrique ($V_2$).

Ici, l'unité de traitement 15 vérifie si :

$$V_1 \; - \; V_2 \; > \; V_{\text{seuil}}$$

où $V_1$ est la première tension, $V_2$ est la deuxième tension, et $V_{\text{seuil}}$ est un seuil de tension prédéterminé (par exemple égal à 0.4V) : étape E4.

Si c'est le cas, l'unité de traitement 15 en déduit que le boîtier 2 est bien fermé. La phase de détection s'achève et le procédé repasse à l'étape E1.

Si $V_1 - V_2 \leq V_{\text{seuil}}$
l'unité de traitement 15 détecte une ouverture du boîtier 2.

L'unité de traitement 15 confirme ce résultat par une seconde mesure (c'est-à-dire répète les étapes E2, E3 et E4) : étape E5.

L'unité de traitement 15 vérifie si la détection de l'ouverture du boîtier 2 est ou non confirmée : étape E6.

Si la détection de l'ouverture du boîtier 2 n'est pas confirmée, la phase de détection s'achève et le procédé repasse à l'étape E1.

Sinon, l'unité de traitement 15 enregistre l'information selon laquelle le boîtier 2 est ouvert, produit un message d'alarme et le transmet au distributeur de fluide et/ou au gestionnaire du réseau : étape E7.

Il est possible de réutiliser les mesures précédentes par filtrage de mesures hors norme et moyennage afin de faire évoluer le seuil de tension prédéterminé $V_{\text{seuil}}$. Le seuil de tension prédéterminé $V_{\text{seuil}}$ est donc alors un seuil dynamique.

Le seuil de tension prédéterminé $V_{\text{seuil}}$ est par exemple défini à partir de l'historique des mesures précédentes.

On a par exemple :

$$V_{seuil} = (Moy\_V_1 - Moy\_V_2) / 2,$$

où Moy_$V_1$ est la moyenne des valeurs de $V_1$ entre le premier et le troisième quartile et Moy_$V_2$ est la moyenne des valeurs de $V_2$ entre le premier et le troisième quartile.

Avantageusement, on ajoute dans le boîtier 2 un ou des guides optiques 30 pour maintenir le faisceau lumineux concentré et permettre qu'il se reflète en totalité sur le boîtier 2.

Le compteur 1 comprend ici un premier guide optique 30a positionné entre la LED 21 et la paroi interne 23, et agencé pour guider et concentrer les signaux lumineux en direction de la paroi interne 23. Le compteur 1 comprend aussi un deuxième guide optique 30b positionné entre le phototransistor 22 et la paroi interne 23, et agencé pour guider et concentrer les signaux lumineux en direction du phototransistor 22.

Le premier guide optique 30a a une forme cylindrique dont l'axe $X_a$ s'étend verticalement par rapport à la carte 3 depuis la LED 21. L'axe $X_a$ est perpendiculaire à la carte électrique 3, à la face supérieure 10 de la deuxième partie de boîtier 5 et à la face supérieure 8 de la première partie de boîtier 4.

Le deuxième guide optique 30b a une forme cylindrique dont l'axe $X_b$ s'étend verticalement par rapport à la carte 3 depuis le phototransistor 22. L'axe $X_b$ est perpendiculaire à la carte électrique 3, à la face supérieure 10 de la deuxième partie de boîtier 5 et à la face supérieure 8 de la première partie de boîtier 4.

Le premier guide optique 30a et le deuxième guide optique 30b s'étendent verticalement et perpendiculairement depuis la paroi interne 31 de la face supérieure 10 de la deuxième partie de boîtier 5.

Ici, le premier guide optique 30a et le deuxième guide optique 30b sont fabriqués en une seule pièce.

On note que le compteur 1 comprend aussi un dispositif de guidage, non représenté, qui permet de diriger le faisceau lumineux depuis la sortie du premier guide optique 30a vers l'entrée du deuxième guide optique 30b.

Le compteur 1 comporte aussi un dispositif de cache 32.

Le dispositif de cache 32 comprend une première portion 32a et une deuxième portion 32b.

La première portion 32a délimite un espace interne 33 dans lequel est positionné le récepteur 22 (ou tout au moins sa cellule sensible). La première portion 32a permet d'empêcher que des signaux lumineux parasites, provenant de l'intérieur ou de l'extérieur du boîtier 2, ne perturbent le récepteur 22.

La première portion 32a a une forme cylindrique et a pour axe un axe $X_c$, perpendiculaire à la carte électrique 3, à la face supérieure 10 de la deuxième partie de boîtier 5 et à la face supérieure 8 de la première partie de boîtier 4. L'axe $X_c$ passe ici par un point situé au milieu du segment reliant la LED 21 et le phototransistor 22.

La première portion 32a s'étend verticalement et perpendiculairement depuis la paroi interne 31 de la face supérieure 10 de la deuxième partie de boîtier 5.

L'extrémité libre de la première portion 32a est très proche de la carte 3 (voire en contact avec celle-ci).

Le dispositif de cache 32 comprend aussi une deuxième portion 32b.

La deuxième portion 32b est située entre l'émetteur 21 et le récepteur 22. Elle permet d'empêcher que des réflexions parasites, résultant d'une réflexion des signaux lumineux émis par l'émetteur 21 sur le premier guide optique 30a ou sur le deuxième guide optique 30b, ou d'un rayonnement latéral provenant de l'émetteur 21, ne perturbent le récepteur 22.

La deuxième portion 32b est une cloison droite qui s'étend verticalement et perpendiculairement depuis la carte électrique 3. La hauteur de cette cloison s'étend selon l'axe $X_c$, et est telle que le sommet de la cloison est positionné selon l'axe $X_c$ à proximité (voire au-dessus) de l'extrémité libre des guides optiques 30a, 30b.

L'émetteur 21 et le récepteur 22 peuvent être agencés pour respectivement émettre et recevoir des signaux lumineux qui sont des signaux non visibles, c'est-à-dire qui sont produits en émettant une lumière ayant une longueur d'onde incluse dans le spectre non visible.

Cela empêche un potentiel fraudeur de constater que le procédé de détection est mis en œuvre dans le compteur 1, et ce, même si le boîtier 1 comporte une face transparente ou translucide à la lumière visible (comme la deuxième partie de boîtier 5) que pourraient franchir des signaux lumineux émis par la LED 21.

Par ailleurs, on peut choisir une lumière ayant une longueur d'onde différente de celles des lumières normalement présentes dans l'environnement du compteur 1, pour éviter de perturber le dispositif de détection 20. La lumière est ainsi par exemple une lumière infrarouge.

Il est possible aussi de choisir une lumière qui soit plus difficile à reproduire par un potentiel fraudeur, par exemple une lumière bleue.

Le compteur 1 peut aussi comprendre une pluralité d'émetteurs 21, générant des lumières de différentes longueurs d'onde, qui sont activés de manière alternée pour assurer qu'il n'y a pas de reproduction de la source par un potentiel fraudeur.

La paroi interne 23 de la première partie de boîtier 4 peut être conçue pour améliorer les réflexions.

La paroi interne 23 peut avoir une forme de réflecteur concave.

On adapte donc la surface de la paroi interne 23 pour y ouvrager un réflecteur concave (lors de l'injection plastique pas exemple) qui va concentrer les rayons lumineux de la LED 21 en les réfléchissant vers le phototransistor 22.

La paroi interne 23 peut être fabriquée en plastique injecté avec une finition miroir (état de surface) afin de réfléchir au mieux les signaux lumineux émis par la LED 21.

Il est possible, au cours de la fabrication de la première partie de boîtier 4, de déposer chimiquement un matériau réflecteur sur la paroi interne 23, par exemple par sérigraphie, par spray d'encre ou spray de peinture.

La première partie de boîtier 4 peut comprendre une étiquette autocollante et réfléchissante, collée sur la paroi interne 23. L'étiquette autocollante est sélectionnée pour son pouvoir réfléchissant et sa tenue dans le temps.

La paroi interne 23 peut avoir une couleur ayant une longueur d'onde proche de la longueur d'onde lumineuse de la source de lumière interne (par exemple verte si la source lumineuse est verte).

La paroi interne 23 a par exemple une couleur ayant une longueur d'onde λ1 telle :

$$\lambda1 \ = \ \lambda2 \ \pm \ 10\%,$$

où λ2 est une longueur d'onde des signaux lumineux émis par l'émetteur 21 (c'est-à-dire de la lumière produite par l'émetteur 21).

On peut aussi rapprocher dans le temps les mesures, sans et avec la source de lumière (c'est-à-dire les étapes E2 et E3), pour ne pas être affecté par l'éclairage ambiant (50 ou 60Hz) des tubes fluo-compacts.

L'invention présente un grand nombre d'avantages.

Elle fonctionne à la fois en présence de résine ou de gel transparent dans le compteur 1, mais aussi sans résine ou gel : comme on l'a vu, contrairement aux dispositifs comprenant un contact électromécanique, l'invention fonctionne efficacement même en présence de résine ou de gel.

La consommation en énergie électrique du dispositif de détection 20 est très faible. Le dispositif 20 consomme peu de courant car il est activé pendant un très court moment et éteint pendant des périodes aléatoires et beaucoup plus longues. Ceci permet de limiter la possible dérive de fiabilité des composants optiques. Le dispositif 20 s'adapte parfaitement dans des équipements alimentés par pile (tels que le compteur 1).

La consommation du dispositif 20 (LED 21, phototransistor 22, CAN 18 et microcontrôleur 16) est d'environ 0.5 mA moyen pendant 1 ms, soit 0.5 μAsec. La durée d'une phase de détection Ph étant au minimum de 5 secondes, la consommation est de 0.1 μAsec donc totalement négligeable.

Le dispositif 20 est très simple à mettre en œuvre et présente un coût réduit. Les composants utilisés (par exemple la LED 21 et le phototransistor 22) sont des composants standards qui n'ont pas besoin d'être rapides ou sensibles.

Le dispositif 20 est facilement adaptable et peut s'installer sur des produits existants, sans modification.

Le dispositif 20 est très sensible. Le dispositif 20 est capable de détecter une ouverture très faible du boîtier 2. Il peut même détecter une infiltration d'eau entre le boîtier 2 et le gel de « *potting* » ou entre la première partie de boîtier 4 et la deuxième partie de boîtier 5 à cause de l'effet de l'eau sur les rayons lumineux.

Le dispositif 20 est robuste aux interférences électroniques, rendant la perturbation par des faussaires difficile, et rendant possible son utilisation dans des environnements électromagnétiques complexes.

Le dispositif 20 permet de prendre toutes les mesures nécessaires, tel que l'effacement des clés, de remonter une alarme et/ou de transmettre cette alarme au réseau de surveillance.

Cette solution est simple, peu énergivore, et peut s'adapter facilement aux dimensions mécaniques de tous les produits.

Le dispositif 20 permet de surmonter les tentatives de fraude. Il est ainsi capable de déjouer des ouvertures du produit dans une salle illuminée ou dans le noir absolu.

Bien entendu, l'invention n'est pas limitée aux modes de réalisation décrits mais englobe toute variante entrant dans le champ de l'invention tel que défini par les revendications.

L'équipement dans lequel est mise en œuvre l'invention n'est pas nécessairement un compteur de fluide. Il peut s'agir de tout type de compteur et même, plus généralement, de tout type d'équipement.

L'émetteur n'est pas nécessairement une LED, mais pourrait être tout type de photoémetteur, et par exemple une diode laser.

Le récepteur n'est pas nécessairement un phototransistor, mais pourrait être tout type de photorécepteur, et par exemple une photodiode.

L'architecture électrique présentée pourrait être différente de celle décrite ici. Par exemple, l'émetteur et le récepteur pourraient être intégrés dans un même composant, directement dans une partie de boîtier, etc. Tous les composants électriques ne sont pas nécessairement montés sur une même carte.

Le boîtier peut être différent de celui présenté ici. La deuxième partie de boîtier est optionnelle. Le boîtier ne comporte d'ailleurs pas nécessairement de partie de boîtier amovible (telle la première partie de boîtier), et le dispositif de détection pourrait détecter une ouverture du boîtier consistant à casser celui-ci.

Si le boîtier ne comprend pas la deuxième partie de boîtier, l'émetteur et le récepteur peuvent être positionnés en regard et à proximité de la première partie de boîtier.

La détection est ici réalisée en fonction d'une valeur représentative d'une différence entre le premier niveau du premier signal électrique et le deuxième niveau du deuxième signal électrique. Cette valeur n'est donc pas nécessairement égale à la différence entre le premier niveau du premier signal électrique et le deuxième niveau du deuxième signal électrique. Il pourrait

**Revendications**

1. Equipement (1) comprenant un boîtier (2) dans lequel sont intégrés :

    - un émetteur (21) agencé pour émettre des signaux lumineux ;
    - un récepteur (22) agencé pour recevoir les signaux lumineux après que ceux-ci se soient réfléchis contre une paroi interne (23) du boîtier ;
    - une unité de traitement (15) agencée pour :

        ◦ piloter l'émetteur (21) pour que celui-ci émette un signal lumineux de détection (SI) ;
        ◦ acquérir un premier signal électrique ($V_1$) produit par le récepteur (22) lorsque celui-ci reçoit le signal lumineux de détection ;
        ◦ détecter, en fonction d'un premier niveau du premier signal électrique, si le boîtier (2) est ouvert ou fermé,

    **caractérisé en ce que**
    l'unité de traitement (15) est en outre agencée pour :

    - acquérir un deuxième signal électrique ($V_2$) produit par le récepteur alors que l'émetteur est désactivé ;
    - réaliser la détection de l'ouverture ou de la fermeture du boîtier en fonction d'une valeur représentative d'une différence entre le premier niveau du premier signal électrique ($V_1$) et un deuxième niveau du deuxième signal électrique ($V_2$).

2. Equipement selon la revendication 1, dans lequel le boîtier (2) comprend une première partie de boîtier (4), qui est amovible, la paroi interne (23) étant une paroi de la première partie de boîtier, et dans lequel l'émetteur et le récepteur sont tous deux positionnés :

    - en regard et à proximité de la première partie de boîtier, ou
    - en regard et à proximité d'une deuxième partie de boîtier (5) du boîtier, transparente ou translucide aux signaux lumineux, et positionnée entre la première partie de boîtier d'une part, et l'émetteur et le récepteur d'autre part.

3. Equipement selon l'une des revendications précédentes, comprenant en outre :

    - un premier guide optique (30a) positionné entre l'émetteur (21) et la paroi interne (23), et agencé pour guider et concentrer les signaux lumineux en direction de la paroi interne ;
    - un deuxième guide optique (30b) positionné entre le récepteur (22) et la paroi interne, et agencé pour guider et concentrer les signaux lumineux en direction du récepteur.

4. Equipement selon la revendication 3, dans lequel le premier guide optique (30a) et le deuxième guide optique (30b) sont fabriqués en une seule pièce.

5. Equipement selon l'une des revendications précédentes, comprenant en outre un dispositif de cache (32) comportant une première portion (32a) délimitant un espace interne dans lequel est positionné le récepteur (22), et agencée pour empêcher que des signaux lumineux parasites provenant de l'intérieur ou de l'extérieur du boîtier (2), ne perturbent le récepteur.

6. Equipement selon les revendication 3 et 5, dans lequel le dispositif de cache (32) comprend aussi une deuxième portion (32b) située entre l'émetteur (21) et le récepteur (22), et agencée pour empêcher que des réflexions parasites, résultant d'une réflexion des signaux lumineux émis par l'émetteur (21) sur le premier guide optique (30a) ou sur le deuxième guide optique (30b), ou d'un rayonnement latéral provenant de l'émetteur (21), ne perturbent le récepteur (22).

7. Equipement selon l'une des revendications précédentes, dans lequel la paroi interne (23) est fabriquée en plastique injecté avec une finition miroir.

8. Equipement selon l'une des revendications précédentes, dans lequel la paroi interne (23) a une forme de réflecteur concave.

9. Equipement selon l'une des revendications précédentes, comprenant un matériau réflecteur déposé chimiquement sur la paroi interne (23).

10. Equipement selon l'une des revendications précédentes, comprenant une étiquette autocollante et réfléchissante, collée sur la paroi interne (23).

11. Equipement selon l'une des revendications précédentes, dans lequel la paroi interne (23) a une couleur ayant une longueur d'onde λ1 telle :

$$\lambda1 = \lambda2 \pm 10\%,$$

où λ2 est une longueur d'onde des signaux lumineux.

12. Equipement selon l'une des revendications précédentes, l'émetteur et le récepteur étant agencés pour respectivement émettre et recevoir des signaux lumineux qui sont des signaux non visibles.

13. Equipement selon l'une des revendications précédentes, l'équipement étant un compteur de fluide (1).

14. Procédé de détection, mis en œuvre dans l'unité de traitement d'un équipement selon l'une des revendications précédentes, et comprenant une phase de détection (Ph) comprenant les étapes de :

- piloter l'émetteur (21) pour que celui-ci émette un signal lumineux de détection ($S_l$) ;
- acquérir un premier signal électrique ($V_1$) produit par le récepteur lorsque celui-ci reçoit le signal lumineux de détection ;
- détecter, en fonction d'un premier niveau du premier signal électrique, si le boîtier (2) est ouvert ou fermé,

**caractérisé en ce que**
la phase de détection comprend en outre les étapes de :

- acquérir un deuxième signal électrique ($V_2$) produit par le récepteur alors que l'émetteur est désactivé ;
- réaliser la détection de l'ouverture ou de la fermeture du boîtier en fonction d'une valeur représentative d'une différence entre le premier niveau du premier signal électrique ($V_1$) et un deuxième niveau du deuxième signal électrique ($V_2$).

15. Procédé de détection selon la revendication 14, comprenant les étapes de :

- répéter la phase de détection ;
- lorsqu'une phase de détection est terminée, définir une durée aléatoire, et démarrer une phase de détection suivante après la durée aléatoire.

16. Programme d'ordinateur comprenant des instructions qui conduisent l'unité de traitement de l'équipement électrique selon la revendication 1 à exécuter les étapes du procédé de détection selon la revendication 14.

17. Support d'enregistrement lisible par ordinateur, sur lequel est enregistré le programme d'ordinateur selon la revendication 16.

**Patentansprüche**

1. Gerät (1), umfassend ein Gehäuse (2), in welchem Folgendes eingebaut ist:

- ein Sender (21), der dafür ausgelegt ist, Lichtsignale auszusenden;
- ein Empfänger (22), der dafür ausgelegt ist, die Lichtsignale zu empfangen, nachdem diese von einer Innenwand (23) des Gehäuses reflektiert wurden;
- eine Verarbeitungseinheit (15), die dafür ausgelegt ist:

  ◦ den Sender (21) anzusteuern, damit von diesem ein Detektions-Lichtsignal (S1) ausgesendet wird;
  ◦ ein erstes elektrisches Signal ($V_1$) zu erfassen, das von dem Empfänger (22) beim Empfang des Detektions-Lichtsignals erzeugt wird;
  ◦ in Abhängigkeit zu einem ersten Pegel des ersten elektrischen Signals zu erkennen, ob das Gehäuse (2) offen oder geschlossen ist,

**dadurch gekennzeichnet, dass**
die Verarbeitungseinheit (15) ferner dafür ausgelegt ist:

- ein zweites elektrisches Signal ($V_2$) zu erfassen, das von dem Empfänger erzeugt wird, wenn der Sender deaktiviert ist;
- in Abhängigkeit zu einem Wert, der einen Unterschied zwischen dem ersten Pegel des ersten elektrischen Signals ($V_1$) und einem zweiten Pegel des zweiten elektrischen Signals ($V_2$) darstellt, die Erkennung durchzuführen, ob das Gehäuse geöffnet oder geschlossen ist.

2. Gerät nach Anspruch 1, wobei das Gehäuse (2) ein erstes, abnehmbares Gehäuseteil (4) umfasst, wobei die Innenwand (23) eine Wand des ersten Gehäuseteils darstellt, und wobei der Sender und der Empfänger gleichermaßen:

- dem ersten Gehäuseteil gegenüberliegend und in dessen Nähe positioniert sind, oder
- einem zweiten, transparenten oder lichtsignaldurchlässigen Gehäuseteil (5) gegenüberliegend und in dessen Nähe positioniert sind, welches zwischen einerseits dem ersten Gehäuseteil und andererseits dem Sender und dem Empfänger angeordnet ist.

3. Gerät nach einem der vorhergehenden Ansprüche, ferner umfassend:

- einen ersten Lichtleiter (30a), der zwischen dem Sender (21) und der Innenwand (23) positioniert ist und dafür ausgelegt ist, die Lichtsignale zu der Innenwand hin zu leiten und zu bündeln;

- einen zweiten Lichtleiter (30b), der zwischen dem Empfänger (22) und der Innenwand positioniert ist und dafür ausgelegt ist, die Lichtsignale zu dem Empfänger hin zu leiten und zu bündeln.

4. Gerät nach Anspruch 3, wobei der erste Lichtleiter (30a) und der zweite Lichtleiter (30b) einstückig ausgebildet sind.

5. Gerät nach einem der vorhergehenden Ansprüche, ferner umfassend eine Abdeckvorrichtung (32) mit einem ersten Abschnitt (32a), der einen Innenraum begrenzt, in welchem der Empfänger (22) positioniert ist, und der dafür ausgelegt ist, eine Beeinträchtigung des Empfängers durch störende Lichtsignale aus dem Inneren des Gehäuses (2) oder von außerhalb des Gehäuses (2) zu verhindern.

6. Gerät nach den Ansprüchen 3 und 5, wobei die Abdeckvorrichtung (32) auch einen zweiten Abschnitt (32b) umfasst, der zwischen dem Sender (21) und dem Empfänger (22) angeordnet ist, um eine Beeinträchtigung des Empfängers (22) durch Störreflexionen zu verhindern, die durch eine Reflexion der von dem Sender (21) ausgesendeten Lichtsignale an dem ersten Lichtleiter (30a) oder an dem zweiten Lichtleiter (30b) entstehen, oder die durch eine von dem Sender (21) stammende seitliche Strahlung verursacht werden.

7. Gerät nach einem der vorhergehenden Ansprüche, wobei die Innenwand (23) als Kunststoff-Spritzgussteil mit Spiegelglanz-Oberflächenbehandung hergestellt ist.

8. Gerät nach einem der vorhergehenden Ansprüche, wobei die Innenwand (23) eine konkave Reflektorform aufweist.

9. Gerät nach einem der vorhergehenden Ansprüche, umfassend ein chemisch auf die Innenwand (23) aufgebrachtes Reflektormaterial.

10. Gerät nach einem der vorhergehenden Ansprüche, umfassend ein selbstklebendes, reflektierendes Etikett, das auf der Innenwand (23) aufgeklebt ist.

11. Gerät nach einem der vorhergehenden Ansprüche, wobei die Innenwand (23) eine Farbe mit einer Wellenlänge $\lambda 1$ aufweist, bei welcher:

$$\lambda 1 = \lambda 2 \pm 10\%,$$

wobei $\lambda 2$ eine Wellenlänge der Lichtsignale darstellt.

12. Gerät nach einem der vorhergehenden Ansprüche, wobei der Sender und der Empfänger dafür ausgelegt sind, jeweils Lichtsignale auszusenden und zu empfangen, bei welchen es sich um unsichtbare Lichtsignale handelt.

13. Gerät nach einem der vorhergehenden Ansprüche, wobei es sich bei dem Gerät um einen Fluidzähler (1) handelt.

14. Detektionsverfahren, welches in der Verarbeitungseinheit eines Geräts nach einem der vorhergehenden Ansprüche ausgeführt wird und eine Detektionsphase (Ph) umfasst, welche die Schritte umfasst, dass:

  ◦ der Sender (21) angesteuert wird, damit von diesem ein Detektions-Lichtsignal ($S_l$) ausgesendet wird;
  ◦ ein erstes elektrisches Signal ($V_1$) erfasst wird, das von dem Empfänger beim Empfang des Detektions-Lichtsignals erzeugt wird;
  ◦ in Abhängigkeit zu einem ersten Pegel des ersten elektrischen Signals erkannt wird, ob das Gehäuse (2) offen oder geschlossen ist,

**dadurch gekennzeichnet, dass**
die Detektionsphase ferner die Schritte umfasst, dass:

  - ein zweites elektrisches Signal ($V_2$) erfasst wird, welches von dem Empfänger erzeugt wird, wenn der Sender deaktiviert ist;
  - in Abhängigkeit zu einem Wert, der einen Unterschied zwischen dem ersten Pegel des ersten elektrischen Signals ($V_1$) und einem zweiten Pegel des zweiten elektrischen Signals ($V_2$) darstellt, die Erkennung durchgeführt wird, ob das Gehäuse geöffnet oder geschlossen ist.

15. Detektionsverfahren nach Anspruch 14, welches die Schritte umfasst, dass:

  - die Detektionsphase wiederholt wird;
  - wenn eine Detektionsphase abgeschlossen ist, eine zufällige Dauer definiert wird und, nach Ablauf der zufälligen Dauer, eine nachfolgende Detektionsphase gestartet wird.

16. Computerprogramm, das Befehle umfasst, welche die Verarbeitungseinheit des elektrischen Geräts nach Anspruch 1 dazu veranlassen, die Schritte des Detektionsverfahrens nach Anspruch 14 auszuführen.

17. Computerlesbares Speichermedium, auf welchem das Computerprogramm nach Anspruch 16 abgespeichert ist.

## Claims

1. A piece of equipment (1) comprising a housing (2) in which the following are incorporated:

   - an emitter (21) arranged to emit light signals;
   - a receiver (22) arranged to receive the light signals after they have been reflected against an inner wall (23) of the housing;
   - a processing unit (15) arranged to:

     ∘ control the emitter (21) so that it emits a detection light signal (SI);
     ∘ acquire a first electrical signal ($V_1$) produced by the receiver (22) when it receives the detection light signal;
     ∘ detect, on the basis of a first level of the first electrical signal, whether the housing (2) is open or closed,

   the processing unit (15) being **characterized in that** it is further arranged to:

   - acquire a second electrical signal ($V_2$) produced by the receiver while the emitter is deactivated;
   - detect the opening or closing of the housing on the basis of a value representative of a difference between the first level of the first electrical signal ($V_1$) and a second level of the second electrical signal ($V_2$).

2. A piece of equipment according to claim 1, in which the housing (2) comprises a first housing part (4), which is removable, the inner wall (23) being a wall of the first housing part, and in which the emitter and the receiver are both positioned:

   - opposite and in the vicinity of the first housing part; or
   - opposite and in the vicinity of a second housing part (5) of the housing, which is transparent or translucent to light signals, and positioned between the first housing part, and the emitter and the receiver.

3. A piece of equipment according to one of the preceding claims, further comprising:

   - a first optical guide (30a) positioned between the emitter (21) and the inner wall (23), and arranged to guide and concentrate the light signals towards the inner wall;
   - a second optical guide (30b) positioned between the receiver (22) and the inner wall, and arranged to guide and concentrate the light signals towards the receiver.

4. A piece of equipment according to claim 3, in which the first optical guide (30a) and the second optical guide (30b) are manufactured as a single part.

5. A piece of equipment according to one of the preceding claims, further comprising a masking device (32) comprising a first portion (32a) delimiting an inner space in which the receiver (22) is positioned, and arranged to prevent spurious light signals originating from inside or outside the housing (2) from interfering with the receiver.

6. A piece of equipment according to claims 3 and 5, in which the masking device (32) also comprises a second portion (32b) situated between the emitter (21) and the receiver (22), and arranged to prevent spurious reflections, resulting from the reflection of the light signals emitted by the emitter (21) on the first optical guide (30a) or on the second optical guide (30b), or from lateral radiation originating from the emitter (21), from interfering with the receiver (22).

7. A piece of equipment according to one of the preceding claims, in which the inner wall (23) is made from injection-moulded plastic with a mirror finish.

8. A piece of equipment according to one of the preceding claims, in which the inner wall (23) has the shape of a concave reflector.

9. A piece of equipment according to one of the preceding claims, comprising a reflective material chemically deposited on the inner wall (23).

10. A piece of equipment according to one of the preceding claims, comprising a self-adhesive reflective label stuck to the inner wall (23).

11. A piece of equipment according to one of the preceding claims, in which the colour of the inner wall (23) has a wavelength λ1 such that:

    $$\lambda 1 = \lambda 2 \pm 10\%,$$

    where λ2 is a wavelength of the light signals.

12. A piece of equipment according to one of the preceding claims, the emitter and the receiver being arranged to respectively emit and receive light signals that are non-visible signals.

13. A piece of equipment according to one of the preceding claims, the equipment being a fluid meter (1).

14. A detection method, implemented in the processing unit of a piece of equipment according to one of the preceding claims, and comprising a detection phase (Ph) comprising the steps of:

- controlling the emitter (21) so that it emits a detection light signal ($S_l$);
- acquiring a first electrical signal ($V_1$) produced by the receiver when it receives the detection light signal;
- detecting, on the basis of a first level of the first electrical signal, whether the housing (2) is open or closed.

the detection phase being **characterized in that** it further comprises the steps of:

- acquiring a second electrical signal ($V_2$) produced by the receiver while the emitter is deactivated;
- detecting the opening or closing of the housing on the basis of a value representative of a difference between the first level of the first electrical signal ($V_1$) and a second level of the second electrical signal ($V_2$).

15. A detection method according to claim 14, comprising the steps of:

- repeating the detection phase;
- when a detection phase is complete, defining a random time period, and starting a subsequent detection phase after the random time period.

16. A computer program comprising instructions that cause the processing unit of the electrical equipment according to claim 1 to perform the steps of the detection method according to claim 14.

17. A computer-readable storage medium on which the computer program according to claim 16 is stored.

**Fig. 1**

E0 — Démarrage

E1 — Attendre une durée aléatoire

E2 — Allumage LED et mesure $V_1$

Ph

E3 — Extinction LED et mesure $V_2$

E4 — $V_1 - V_2 > V_{seuil}$ ?  → Oui

Non

E5 — Confirmer par une seconde mesure

E6 — Détection confirmée ?  → Non

Oui

E7 — Alarme

## Fig. 2

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2013118257 A1
- EP 2905585 B1